# EUROPEAN PATENT APPLICATION

(11) **EP 3 043 258 A1**
(43) Date of publication of application: **13.07.2016**
(21) Application number: 13892803.1
(22) Date of filing: 11.11.2013
(51) Int. Cl.: G06F 9/44

(54) **iOS APPLICATION AUTOMATIC COMPILATION METHOD AND SYSTEM**

(30) Priority: 05.09.2013 CN 201310400030
(71) Applicant: Peking University Founder Group Co., Ltd, Beijing 100871 (CN); Founder Information Industry Holdings Co., Ltd., Beijing 100871 (CN); Beijing Founder Electronics Co., Ltd., Beijing 100085 (CN)
(72) Inventor: ZHAO, Chen, Beijing 100085 (CN)
(74) Representative: Dantz, Jan Henning
(86) International application number: PCT/CN2013/086817
(87) International publication number: WO 2015/032129

(57) **Abstract**

Provided is an iOS application automatic compilation method, comprising: according to a request received from a client to construct an iOS application, at least one Web server returns to the client corresponding construction service information so as to enable the client to return input information based on the construction service information; according to the returned input information, the Web server acquires a corresponding program code and modifies the configuration information of the program code, the corresponding program code being prestored in the Web server; the Web server packages the program code according to the modified configuration information, and backs up the packaged program code; and the Web server transmits to the client the message for completing iOS application construction, and provides the client with the downloadable packaged program code. Also provided is an iOS application automatic compilation system.

## Description

### Technical Field

The present invention generally relates to the field of iOS application compilation and construction, and in particular, to a method and system of implementing iOS application automatic compilation.

### Background Art

iOS is an operating system developed by the APPLE INC. for the handheld devices. With the popularity of the handheld devices (such as iPhone, iPad), the applications for the iOS operating system have increased rapidly. However, it is very cumbersome and prone to error to compile and construct an iOS application by using a conventional compiling approach. For example, a conventional procedure for constructing an iOS application is as follows: find out address of the application to be compiled in a code library, de-sign codes by using commands in a command line, open a project, find out the version number of the current code library, find out and modify the configuration information, select the compiling target, modify the compilation type, perform clean command, perform construction command, perform packaging command, submit the modification to the code library, and the like. It needs a lot of effort to do repetitious works. Moreover, transmission is performed only in a host, but not via Web. Furthermore, the certificate required to sign in constructing the application needs to be transmitted to each computer to fulfill the transmission. Thus, it is disadvantage to security of the certificate, and cannot prevent the certificate from being abused.

Description of any prior art herein should not be construed as admitting or implying: content therein is well-known or belongs to the common technical knowledge in the present field before the filing date or priority date of any claim.

### Contents of the invention

The present invention provides a method and system of implementing iOS application automatic compilation which is capable of overcoming at least part of defects existing in the above-discussed prior art.

According to one aspect of the present invention, a method of implementing iOS application automatic compilation is provided, comprising: according to a request received from a client for constructing an iOS application, returning, by at least one Web server, to the client corresponding construction service information so as to enable the client to return input information based on the construction service information; according to the returned input information, acquiring, by the Web server, a corresponding program code and modifying configuration information of the program code, the corresponding program code being pre-stored in the Web server; packaging, by the Web server, the program code according to the modified configuration information, and backuping the packaged program code; and transmitting, by the Web server, to the client a prompting information of the completion of the iOS application construction, and providing the client with the downloadable packaged program code.

According to another aspect of the present invention, a system of implementing iOS application automatic compilation is provided, comprising at least one client and at least one Web server, wherein the Web server comprises a receiving module, a task generating module, a task processing module and a sending module. In the Web server, the receiving module is configured for receiving from the client a request for constructing an iOS application and input information returned by the client based on the returned construction service information by the Web server; the task generating module is configured for generating a new construction task according to the input information; the task processing module is configured for acquiring a corresponding program code according to the construction task, and modifying the configuration information of the program code, wherein after the modifying, the task processing module packages the program code according to the construction task and backuping the packaged program code, while modifying status of the construction task to completion; and the sending module is configured for returning to the client corresponding construction service information, transmitting prompting information of the completion of the iOS application construction, and providing the client with the downloadable packaged program code.

As discussed above, by using the method and system of implementing iOS application automatic compilation provided by the present invention, all the compilation and construction information is submitted or modified via Web. Users do not need to understand how to modify the specific compilation configuration in the underlying layers. Users submit necessary compilation information via only Web pages by way of graphical interface, information filling or checkbox, and thus reduce the requirements for expertise of the users. Further, no efforts is needed in compiling every time to bond the certificate in manual, no efforts is needed in operating the compiler in manual or in modifying the configuration information. As a result, automatization of the whole compilation flow is implemented.

### Description of figures

Figure 1 is an exemplary diagram of a system of implementing iOS application automatic compilation according to an exemplary embodiment of the present invention.
Figure 2 is an exemplary diagram of a Web server according to an exemplary embodiment of the present invention.
Figure 3 is a flowchart of a method of implementing iOS application automatic compilation according to an exemplary embodiment of the present invention.

### Modes of carrying out the invention

For a better understanding of the present invention, reference is made to the appended drawings to describe various aspects of the present invention more detailedly. It will be understood that the appended drawings and detailed description illustrate only the preferred embodiments of the present invention, and should not be construed as limitation to the scope of the present invention in all senses. It should be noted that unless otherwise expressly illustrated, the relative arrangements, mathematic expressions and numeral values of the components and steps set forth in these embodiments are not intended to limit the protection scope of the present invention.

The technologies, methods and devices already known by those ordinary skilled in the related art may not be discussed in detail, but when in appropriate cases, these technologies, methods and devices should be deemed to be a part of the granted specification.

In all the examples shown and discussed herein, any concrete values should be explained to be illustrative only, not to be limitation. Therefore, other examples of the exemplary embodiments may have different values.

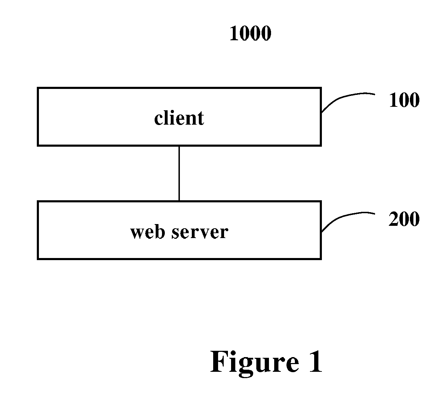

Figure 1 illustrates exemplarily a system 1000 of implementing iOS application automatic compilation according to an exemplary embodiment of the present invention. As shown in Figure 1, the system 1000 includes at least one client 100 and at least one Web server 200.

In one embodiment, the Web server 200 may receive from the client 100 a request for constructing an iOS application and return corresponding construction service information to the client 100. The client 100 may transmit the construction request to the Web server 200 for example by access URL (Uniform Resource Locator). Web server 200 may return a corresponding construction service information to the client 100 via Webpage, wherein the construction service information may include at least construction list information, construction progress information, construction result information, new-built construction information and the like. The Web server 200 according to the returned input information by the client 100 based on the construction service information, may acquire a corresponding program code and modify configuration information of the program code. The corresponding program code may be pre-stored in the Web server 200. According to one embodiment, the input information may include at least construction name, code URL, construction type, version number, compilation certificate, compilation certificate keyword and the like, in which the construction type may includes an enterprise edition construction and an AppStore construction.

According to one embodiment, Web server 200 may further compile, sign and package the program code according to the modified configuration information, and backup the packaged program code. The Web server 200 may for example backup the packaged program code to the code library. After the packaged program code is backuped, the Web server 200 may transmit to the client 100 a prompting information of the completion of the iOS application construction, and may for example provide the client 100 by the code library with the downloadable packaged program code. The packaged program code may for example be IPA packet.

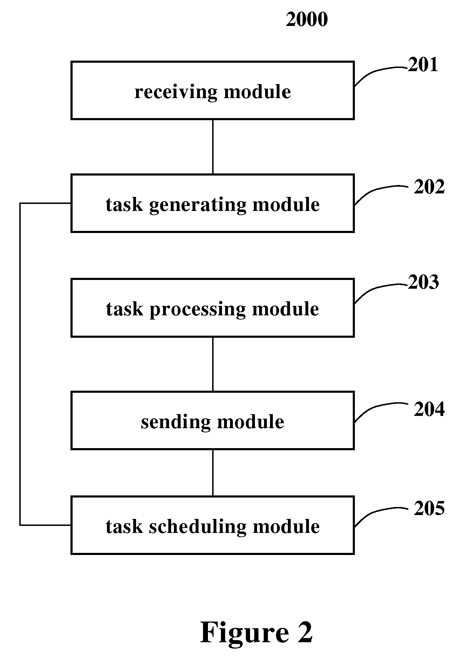

The Web server 200 is further described below with respect to Figure 2. As shown in Figure 2, the Web server 200 includes a receiving module 201, a task generating module 202, a task processing module 203, and a sending module 204.

In one embodiment, the receiving module 201 is configured for receiving from the client 100 a request for constructing an iOS application and input information returned by the client 100 based on the construction service information, in which the received request and input information may be stored in a database. The task generating module 202 is configured for generating a new construction task according to the input information. The new construction task may be also stored in the database for task scheduling. The task processing module 203 is configured for acquiring a corresponding program code according to the construction task, and modifying the configuration information of the program code. After the modifying, the task processing module 203 may further invoke a compiler according to the construction task and sign a packager so as to compile, sign and package the program code, and may backup the packaged program code while modifying status of the construction task to completion. The sending module 204 is configured for returning to the client 100 corresponding construction service information, transmitting prompting information of the completion of the iOS application construction, and providing the client 100 with the downloadable packaged program code.

Further, according to another embodiment, if there exists a plurality of Web server 200-1, 200-2, ......200-n (n is a natural number, and collectively referred to as Web server 200), the Web server 200 further comprises a task scheduling module 205 for assigning the generated construction task to Web server(s) in an idle status among the plurality of Web servers.

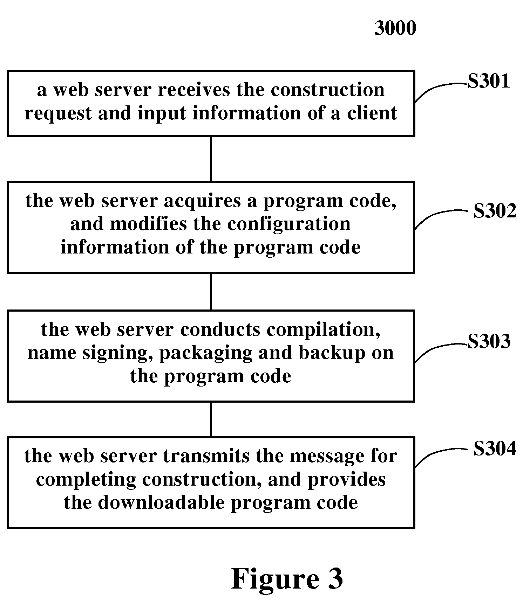

The method 3000 of implementing iOS application automatic compilation is described in detail below with respect to Figure 3.

According to one embodiment, in step S301, at least one Web server 200 may according to a request received from a client 100 for constructing an iOS application, return to the client 100 corresponding construction service information so as to enable the client 100 to return input information based on the construction service information. In step S302, the Web server 200 may according to the returned input information, acquire a corresponding program code and modify configuration information of the program code, the corresponding program code being pre-stored in the Web server 200. The Web server 200 may generates a new construction task(s) according to the returned input information from the client 100, and acquire a corresponding program code according to the construction task and modify the configuration information of the program code. And then, in step S303, the Web server 200 may package the program code according to the modified configuration information, and backup the packaged program code. The Web server 200 may compile and sign the program code according to the construction task, package the compiled and signed program code, then backup the packaged program code while modifying status of the construction task to completion. In step S304, the Web server 200 may transmit to the client 100 prompting information of the completion of the iOS application construction, and provide the client 100 with the downloadable packaged program code.

Further, according to another embodiment, if there exists a plurality of Web server 200-1, 200-2, ......200-n (n is a natural number, and collectively referred to as Web server 200), then after generating a new construction task and before acquiring a corresponding program code according to the construction task, the Web server 200 may further assign the generated construction task to Web server(s) in an idle status among the plurality of Web servers.

The present disclosure also provides one or more computer readable medium embedded with computer executable instructions. When executed by the computer, the instructions execute a method of implementing iOS application automatic compilation, comprising: according to a request received from a client for constructing an iOS application, returning, by at least one Web server, to the client corresponding construction service information so as to enable the client to return input information based on the construction service information; according to the returned input information, acquiring, by the Web server, a corresponding program code and modifying configuration information of the program code, the corresponding program code being pre-stored in the Web server; packaging, by the Web server, the program code according to the modified configuration information, and backuping the packaged program code; and transmitting, by the Web server, to the client a prompting information of the completion of the iOS application construction, and providing the client with the downloadable packaged program code.

The present disclosure also provides a computer including one or more computer readable medium embedded with computer executable instructions. When executed by the computer, the instructions execute a secure communication authentication method in a distributed environment.

### Exemplary operation environments

The computing device such as those described herein have hardware, including one or more processor or processing unit, system storage or computer readable medium in some form. By way of example and no limitation, the computer readable medium includes the computer storage medium and communication medium. The computer storage medium includes volatile and nonvolatile, removable and unremovable medium implemented by using any method and technologies for storing information such as computer readable instruction, data structure, program module or other data. The communication medium is generally embodied with computer readable instruction, data structure, program module or other data by using modulated data signal by such as carriers or other transmission mechanism and so on, and includes any information transport medium. Any of the combinations of the above-described medium also fall within the scope of the computer readable medium.

The computer can use one or more remote computers, such as logics of the remote computer are connected in the networked environment to operate. Although the present invention is described with respect to the exemplary computing system environment, the respective embodiments of the present invention can be used in numerous other general or private computing system environments or configurations. The computing system environments are not intended to set any limitation to the application range or functions of any aspects of the present invention. Further, the computer environment should not be construed as there existing any dependence on or requirement of any components or their combinations as shown in the exemplary operation environment. Examples of the well known computing system, environment and / or configuration suitable for respective aspects of the present invention include but not limit to personable computer, server computer, handheld or laptop device, multiprocessor system, microprocessor-based system, set-top box, programmable consumer electronic products, mobile telephone, network PC, micro-computer, macro-computer, the distributed computing environment including anyone of the systems or devices as indicated above, and the like.

The embodiments of the present invention can be described in the general context of the computer executable instructions executed on one or more computing devices such as program modules. The computer executable instructions can be organized as one or more computer executable components or modules by the software. Generally, program modules include but not limit to routines, program, object, component, and data structure performing certain task or implementing specific abstract data type. The aspects of the present invention can be implemented by using any number of such components or modules or their organizations. For example, the aspects of the present invention is not limited to the specific computer executable instructions or specific components or modules as shown in figures and described herein. Other embodiments of the present invention may include different computer executable instructions or components with functions more or less than functions as shown and described herein. The aspects of the present invention can be implemented in the distributed computing environment in which tasks are performed by the remote processing device via communication network links. In the distributed computing environment, the program modules can be located in the local and remote computer storage medium including memory storages.

Those skilled in the art should understand that the descriptions of the method and system of the present invention are not limited to the embodiments such as the specific embodiments disclosed herein. The above descriptions have been presented for purposes of illustration of the present invention, but are not intended to limit the present invention in any way. Other implementations derived from technical solutions of the present invention by those skilled in the art also fall within the scope of the inventive and novel technologies according to the present invention. The protection scope of the present invention is defined by the following claims and equivalents thereof.

## Claims

1. A method of implementing iOS application automatic compilation, comprising:
according to a request received from a client for constructing an iOS application, returning, by at least one Web server, to the client corresponding construction service information so as to enable the client to return input information based on the construction service information;
according to the returned input information, acquiring, by the Web server, a corresponding program code and modifying configuration information of the program code, the corresponding program code being pre-stored in the Web server;
packaging, by the Web server, the program code according to the modified configuration information, and backuping the packaged program code; and
transmitting, by the Web server, to the client a prompting information of the completion of the iOS application construction, and providing the client with the downloadable packaged program code.

2. The method of claim 1, wherein the step of acquiring, by the Web server, a corresponding program code and modifying the configuration information of the program code comprises:
generating a new construction task according to the returned input information from the client; and
acquiring a corresponding program code according to the construction task and modifying the configuration information of the program code.

3. The method of claim 2, wherein the step of packaging, by the Web server, the program code and backuping the packaged program code comprises:
compiling and signing the program code according to the construction task;
packaging the compiled and signed program code;
backuping the packaged program code; and
modifying status of the construction task to completion.

4. The method of claim 1, wherein the construction service information includes at least one of:
construction list information, construction progress information, construction result information, and new-built construction information.

5. The method of claim 1, wherein the input information includes at least one of:
construction name, code URL, construction type, version number, compilation certificate, and compilation certificate keyword.

6. The method of claim 2 or 3, wherein if there exists a plurality of Web servers, then between the steps of generating a new construction task and acquiring a corresponding program code according to the construction task, the method further comprises:
assigning the generated construction task to the Web server in an idle status among the plurality of Web servers.

7. A system of implementing iOS application automatic compilation, comprising:
at least one client; and
at least one Web server;
wherein the Web server comprises:
receiving module for receiving from the client a request for constructing an iOS application and input information returned by the client based on the returned construction service information by the Web server;
task generating module for generating a new construction task according to the input information;
task processing module for acquiring a corresponding program code according to the construction task, and modifying the configuration information of the program code, wherein after the modifying, the task processing module packages the program code according to the construction task and backuping the packaged program code, while modifying status of the construction task to completion; and
sending module for returning to the client corresponding construction service information, transmitting prompting information of the completion of the iOS application construction, and providing the client with the downloadable packaged program code.

8. The system of claim 7, wherein the construction service information includes at least one of:
construction list information, construction progress information, construction result information, and new-built construction information.

9. The system of claim 7, wherein the input information includes at least one of:
construction name, code URL, construction type, version number, compilation certificate, and compilation certificate keyword.

10. The system of claim 7, wherein the Web server further comprises:
task scheduling module for assigning the generated construction task to the Web server in an idle status among the plurality of Web servers.
